# EUROPEAN PATENT SPECIFICATION

(11) **EP 2 216 171 B1**
(45) Date of publication and mention of the grant of the patent: **11.04.2018**
(21) Application number: 10152502.0
(22) Date of filing: 03.02.2010
(51) Int. Cl.: B32B 15/06, B32B 15/08, B32B 5/18, B32B 5/20

(54) **REINFORCING MATERIAL FOR OUTER PANEL AND METHOD FOR REINFORCING OUTER PANEL**
VERSTÄRKUNGSMATERIAL FÜR AUSSENPANEEL UND VERFAHREN ZUR VERSTÄRKUNG VON AUSSENPANEELEN
MATÉRIAU DE RENFORT POUR PANNEAU EXTÉRIEUR ET PROCÉDÉ DE RENFORT DE PANNEAU EXTÉRIEUR

(30) Priority: 05.02.2009 JP 2009025222; 23.12.2009 JP 2009291602; 08.01.2010 JP 2010002926
(43) Date of publication of application: 11.08.2010
(73) Proprietor: NITTO DENKO CORPORATION, Ibaraki-shi, Osaka 567-8680 (JP)
(72) Inventor: Fujii, Takahiro, Ibaraki-shi Osaka (JP); Tachibana, Katsuhiko, Ibaraki-shi Osaka (JP); Mase, Takuya, Ibaraki-shi Osaka (JP)
(74) Representative: Grünecker Patent- und Rechtsanwälte PartG mbB

(56) References cited:
- EP-A2- 1 531 040
- GB-A- 2 187 745
- DATABASE WPI Week 199948 Thomson Scientific, London, GB; AN 1999-566756 XP002604689 & JP 11 246827 A (NITTO DENKO CORP) 14 September 1999 (1999-09-14)
- DATABASE WPI Week 200679 Thomson Scientific, London, GB; AN 2006-773198 XP002604690 & JP 2006 281741 A (NITTO DENKO CORP) 19 October 2006 (2006-10-19)

## Description

### FIELD OF THE INVENTION

The present invention relates to a reinforcing material for outer panel and a method for reinforcing an outer panel. Specifically, it relates to a reinforcing material for outer panel, which is adhered to an outer panel of various industrial machinery such as transport machinery to thereby reinforce the outer panel, and relates to a method for reinforcing an outer panel.

### BACKGROUND OF THE INVENTION

Heretofore, an outer panel for car body is generally manufactured to be a thin steel plate having a thickness of from 0.6 to 0.8 mm for reducing the body weight. Accordingly, a steel plate-reinforcing sheet is adhered to the inner face of the thin steel plate to reinforce the steel plate.

As the steel plate-reinforcing sheet, a laminate constructed by laminating a constrained layer such as a glass cloth, a metal thin plate or the like with a sheet-like resin layer formed of a thermosetting resin composition is well known. As the thermosetting resin composition, an epoxy resin composition (see JP-A 8-325349) and a rubber-epoxy composition containing a styrene-butadiene rubber, an epoxy resin and curing agent therefor (see JP-A 11-246827) have been proposed.

EP 1 531 040 A2 also discloses a resin composition comprising an epoxy resin, an acrylonitrile-butadiene rubber, a curing agent and a foaming agent, the composition being rolled to form a resin layer upon which a reinforcing layer is laminated to obtain a steel plate reinforcing sheet.

However, with the recent stream to further reduction in car body weight, there is seen a tendency toward further reduction in the thickness of steel plates and toward changing from conventional steel plates to aluminum plates having a small specific gravity for outer panel materials for vehicles.

With further reduction in the thickness of steel plates and the material change to aluminum plates, in case where conventional steel plate-reinforcing adhesive sheets are used for them, there may occur some inconvenience in that the outer panel may be strained and may therefore have some negative influence on the design surface of vehicles. Accordingly, as the reinforcing material capable of preventing the strain to occur in the design surface of vehicles, a reinforcing material of which the thickness of the outer peripheral part is reduced (for example, see JP-A 2006-341821) has been proposed. Also a method of modifying the edge of a reinforcing material to a waved form for preventing strain (for example, see JP-A 2004-106603) has been employed. However, modifying the shape of the reinforcing material is troublesome in the process of producing it and could not attain a sufficient strain-reducing effect.

### SUMMARY OF THE INVENTION

An object of the invention is to provide a reinforcing material for outer panel, capable of preventing strain to occur in the design surface of the outer panel without changing the shape of the reinforcing material, and to provide a method for reinforcing an outer panel. To attain the above-mentioned object, the reinforcing material for outer panel is as defined in appended claim 1.

The reinforcing material for outer panel of the invention has: a 1 mm displacement strength of 20 N or more when adhered to an entire surface of a cold-rolled steel plate having a size of 25 mm width × 150 mm length × 0.8 mm thickness and then heated at 180°C for 20 minutes; and a strain amount of 170 µm or less when adhered to a center part of an aluminum panel having a size of 200 mm width × 300 mm length × 1 mm thickness, in the form of a rectangular having a size of 50 mm width × 100 mm length, and then heated at 180°C for 20 minutes.

The reinforcing material for outer panel of the invention has a resin layer including a resin composition which contains: a rubber component containing at least a low-polarity rubber and an acrylonitrile-butadiene rubber; a flexible epoxy resin; a curing agent; and a foaming agent.

Preferably, in the reinforcing material for outer panel of the invention, the ratio by weight of the rubber component to the flexible epoxy resin is from 20/80 to 95/5.

Additionally, in the reinforcing material for outer panel of the invention, the curing agent is preferably a thermosetting curing agent.

Further, in the reinforcing material for outer panel of the invention, the foaming agent is preferably a thermally-degradable foaming agent.

The reinforcing material for outer panel of the invention has a reinforcing layer to be laminated on the resin layer.

Further, the invention relates to a method for reinforcing an outer panel, the method including a step of adhering the above-mentioned reinforcing material to an outer panel, followed by foaming and curing.

According to the reinforcing material for outer panel and the method for reinforcing an outer panel of the invention, the strain in the design surface of vehicles can be prevented to occur without changing the shape and the like of the reinforcing material and the design surface of vehicles can be reinforced,

### BRIEF DESCRIPTION OF THE DRAWINGS

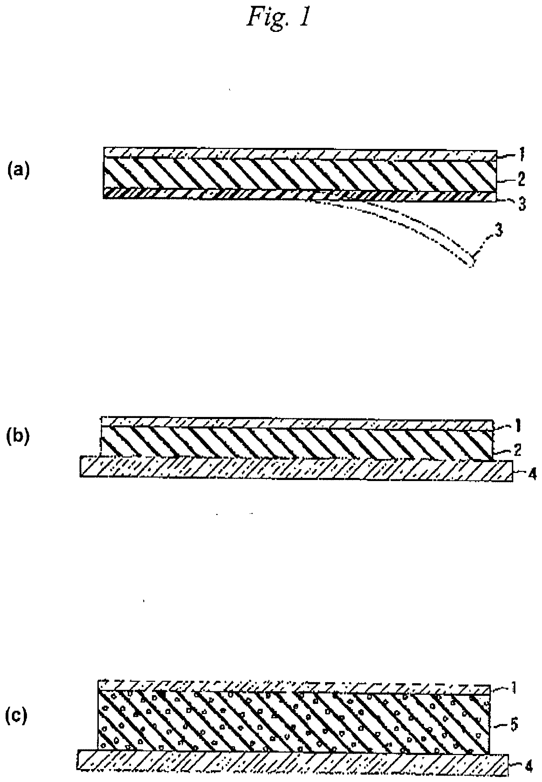

Figs. 1(a) to 1(c) show a process drawing of one embodiment of a method for reinforcing a steel plate by using a reinforcing material for outer panel of the invention, in which Fig. 1(a) shows a step of preparing a steel plate-reinforcing sheet and peeling a release film from it, Fig. 1(b) shows a step of adhering the steel plate-reinforcing sheet to a steel plate, and Fig. 1(c) shows a step of heating the steel plate-reinforcing sheet to thereby foam and cure.

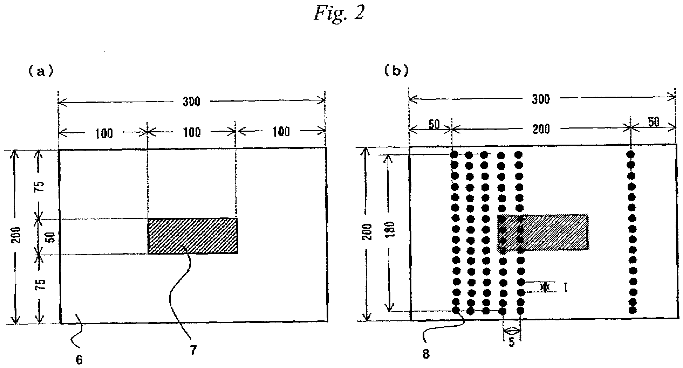

Figs. 2(a) and 2(b) show an evaluation method of evaluating the strain amount in a reinforcing material for outer panel of the invention, in which Fig. 2(a) shows a state of a steel plate-reinforcing material adhered to an aluminum panel for evaluation, and Fig. 2(b) shows a measurement pitch for surface unevenness. In the drawing, the unit of the length is "mm".

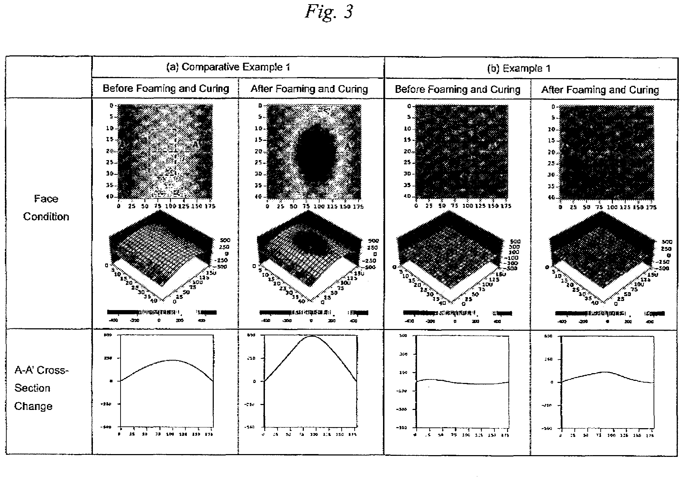

Figs. 3(a) and 3(b) show the evaluation results of the state of strain of a reinforcing material for outer panel of the invention, in which Fig. 3(a) shows the state of the reinforcing material of Comparative Example 1 adhered to an aluminum panel, and Fig. 3(b) shows the state of the reinforcing material of Example 1 adhered to an aluminum panel.

### Description of Reference Numerals and Signs

- 1: Reinforcing Layer
- 2: Resin Layer
- 3: Separator (release paper)
- 4: Steel Plate
- 5: Foam layer
- 6: Aluminum Panel
- 7: Reinforcing Material for Outer Panel
- 8: Measurement Site of Unevenness

### DETAILED DESCRIPTION OF THE INVENTION

The reinforcing material for outer panel of the invention is adhered to an outer panel.

In the invention, for measuring the 1 mm displacement strength of the reinforcing material to a cold-rolled steel plate, a cold-rolled steel plate (SPCC-SD) manufactured by Nippon Test Panel is used.

In the invention, since the reinforcing material for outer panel, having a 1 mm displacement strength of 20 N or more when adhered to the entire surface of a cold-rolled steel plate having a size of 25 mm width × 150 mm length × 0.8 mm thickness and then heated at 180°C for 20 minutes, is used, the invention has the advantage in that the reinforcing material can efficiently reinforce an outer panel. In the invention, the 1 mm displacement strength of the reinforcing material is preferably from 20 to 150 N, more preferably from 22 to 70 N.

In the invention, the 2 mm displacement strength of the reinforcing material, when adhered to the entire surface of a cold-rolled steel plate having a size of 25 mm width × 150 mm length × 0,8 mm thickness and then heated at 180°C for 20 minutes, is preferably 25 N or more, more preferably from 25 to 250 N, even more preferably from 30 to 100 N. The 2 mm displacement strength indicates the reinforcing property to a larger deformation, and in order that the reinforcing material could be resistant to impact that is estimated in practical use, the value of the 2 mm displacement strength thereof preferably falls within the above-mentioned range.

In the invention, for measuring the strain amount of aluminum panel, an aluminum panel (A6061P) manufactured by Nippon Test Panel is used.

In the invention, since the reinforcing material for outer panel, having a strain amount of 170 µm or less when adhered to the center part of an aluminum panel having a size of 200 mm width × 300 mm length × 1 mm thickness, in the form of a rectangular having a size of 50 mm width × 100 mm length, and then heated at 180°C for 20 minutes is used, the invention has the advantage in that the reinforcing material can reinforce an outer panel without any negative influence on the design of the outer panel. In the invention, the strain amount is preferably 100 µm or less, more preferably 80 µm or less (generally 30 µm or less).

The constitution of the reinforcing material for outer panel of the invention has: a 1 mm displacement strength of 20 N or more when adhered to an entire surface of a cold-rolled steel plate having a size of 25 mm width × 150 mm length × 0.8 mm thickness and then heated at 180°C for 20 minutes; and a strain amount of 170 µm or less when adhered to a center part of an aluminum panel having a size of 200 mm width × 300 mm length × 1 mm thickness, in the form of a rectangular having a size of 50 mm width × 100 mm length, and then heated at 180°C for 20 minutes. The reinforcing material has a resin layer including a resin composition which contains: a rubber component containing at least a low-polarity rubber and an acrylonitrile-butadiene rubber; a flexible epoxy resin; a curing agent; and a foaming agent.

Many ordinary steel plate-reinforcing materials contain an epoxy resin for increasing the reinforcing strength thereof. However, it is considered that the epoxy resin heretofore used in the art brings about a large volume contraction in curing and is therefore a cause of producing strain. In the invention, since a flexible epoxy resin is used, flexibility is imparted to the cured resin product. Therefore, it is possible to prepare a resin composition that can be cured into a flexible cured product in which the strain may be reduced without lowering the strength thereof.

Since the resin composition contains a low-polarity rubber, the resin composition may be well worked in a broad temperature range and may exhibit good adhesiveness to steel plate having an oiled face.

Since the resin composition contains an acrylonitrile-butadiene rubber, the compatibility between the low-polarity rubber and the flexible epoxy resin component therein may be enhanced, and it is possible to prepare the resin composition having excellent kneading workability and handling workability,

The rubber component for use in the invention contains at least a low-polarity rubber and an acrylonitrile-butadiene rubber.

In the invention, the low-polarity rubber is a rubber not having a polar group such as an amino group, a carboxyl group or a nitrile group in the molecule, and examples thereof includes a solid or liquid rubber such as a styrene-butadiene rubber, a polybutadiene rubber, a polyisoprene rubber, an isoprene-isobutylene rubber, a polyisobutylene rubber, a natural rubber, a polybutene rubber. In the invention, a styrene-butadiene rubber and a polybutadiene rubber are preferred from the viewpoint of the excellent kneading workability and the moldability thereof, and a styrene-butadiene rubber is more preferred. The blend ratio of the low-polarity rubber is, for example, from 1 to 300 parts by weight, preferably from 5 to 200 parts by weight based on 100 parts by weight of the total of the flexible epoxy resin and the acrylonitrile-butadiene rubber. By incorporating the low-polarity rubber, the adhesiveness of the resin layer to an outer panel having an oily component adhering thereto can be enhanced.

In the invention, the acrylonitrile-butadiene rubber (NBR: acrylonitrile-butadiene copolymer) is a synthetic rubber to be produced by emulsion polymerization of acrylonitrile and butadiene and is not particularly limited. For example, those with a carboxyl group introduced thereinto, and those partially crosslinked with a sulfur or metal oxide may be used. The acrylonitrile-butadiene rubber is a solid rubber and has good compatibility with epoxy resin. Therefore, by incorporating the acrylonitrile-butadiene rubber in the resin composition, it is possible to enhance the adhesiveness, handling ability and the reinforcing property of the resin composition in a broad temperature range around room temperature. The acrylonitrile content in the acrylonitrile-butadiene rubber is preferably from 10 to 50 % by weight, and the Mooney viscosity (ML₁₊₄ 100°C) of the acrylonitrile-butadiene rubber is preferably 25 or more.

In the invention, the resin composition may contain any other rubber component than the low-polarity rubber and the acrylonitrile-butadiene rubber; and for example, the composition may contain an acryl rubber, a fluoro-rubber, a silicone-modified rubber or the like. In case where the other rubber component than the low-polarity rubber and the acrylonitrile-butadiene rubber is added to the composition, since it may impair the adhesiveness of the resin layer to oiled face, the blend ratio of the additional rubber component is preferably 50 % by weight or less of the entire rubber component, more preferably 30 % by weight or less.

In the invention, the flexible epoxy resin is an epoxy resin having a flexible component in the skeleton thereof is selected from an aliphatic-modified epoxy resin, a butadiene-based epoxy resin, an ε-caprolactone-modified epoxy resin, a thiol-based epoxy resin, a rubber (NBR, carboxyl group-terminated NBR, amino group-terminated NBR or the like)-modified epoxy resin, a dimer acid-modified epoxy resin, an urethane-modified epoxy resin, a polyol-modified epoxy resin and an amine-modified epoxy resin. Of those flexible epoxy resins, preferred for use herein are an aliphatic-modified epoxy resin, a rubber-modified epoxy resin and a dimer acid-modified epoxy resin, from the viewpoint of the compatibility thereof with the rubber component and the adhesiveness of the resin layer to oiled face. Even more preferred is a dimer acid-modified epoxy resin. One or more such flexible resins may be used here either singly or as combined.

The epoxy equivalent of the flexible epoxy resin for use in the invention is preferably from 200 g/eq to 2000 g/eq, more preferably from 500 g/eq to 1200 g/eq. When the epoxy equivalent is less than 200 g/eq, then the resin is inconvenient as poor in flexibility; and when the epoxy equivalent is more than 2000 g/eq, then the resin is inconvenient in that it could not satisfy both the adhering workability and the reinforcing property required for the reinforcing material.

In the invention, any other epoxy resin may be used along with the flexible epoxy resin, and for example, usable are a bisphenol A-type epoxy resin, a bisphenol F-type epoxy resin, a phenol-novolak-type epoxy resin, a cresol-novolak-type epoxy resin, an alicyclic epoxy resin, a nitrogen-containing ring epoxy resin such as triglycidyl isocyanurate and hydantoin-epoxy resin, a hydrogenated bisphenol A-type epoxy resin, an aliphatic epoxy resin, a glycidyl ether-type epoxy resin, a bisphenol S-type epoxy resin, a bisphenyl-type epoxy resin, a dicyclo-type epoxy resin, a naphthalene-type epoxy resin, etc. These epoxy resins are preferably liquid or semisolid at room temperature for exhibiting good adhesiveness at low temperature.

In case where the other epoxy resin than the flexible epoxy resin is incorporated in the resin composition, the outer panel may be strained. Therefore, the amount of the additional epoxy resin is preferably 100 parts by weight or less, more preferably 50 parts by weight or less based on 100 parts by weight of the flexible epoxy resin.

In the reinforcing material for outer panel of the invention, the ratio by weight of the rubber component to the flexible epoxy resin is preferably from 20/80 to 95/5, more preferably from 30/70 to 80/20. When the rubber component is less than 20 %, then the handling workability of the material may be poor, and the adhesiveness thereof to steel plate having an oiled face may be insufficient. On the other hand, when the rubber component is more than 95 %, then the adhesiveness of the cured resin material to steel plate may be poor.

Regarding the ratio by weight of the acrylonitrile-butadiene rubber and the flexible epoxy resin, the ratio by weight of flexible epoxy resin/acrylonitrile-butadiene rubber is preferably from 70/30 to 95/5, more preferably from 75/25 to 92/8. In the ratio by weight to the flexible epoxy resin, when the acrylonitrile-butadiene rubber is more than 30 %, then the reinforcing effect of the resin composition may be lowered. When it is less than 5 %, the viscosity of the steel plate-reinforcing resin composition may be lowered and the handling ability thereof may be poor. On the other hand, when the weight ratio falls within the above range, then the resin composition can exhibit low-temperature adhesiveness owing to the good compatibility between the rubber component and the flexible epoxy resin and can exhibit high-temperature aggregability due to the acrylonitrile-butadiene rubber being a solid rubber, and therefore the resin composition can attain excellent handling ability and reinforcing effect.

In the invention, the curing agent is preferably a thermosetting curing agent that cures under heat, and examples thereof include amine compounds, acid anhydride compounds, amide compounds, hydrazide compounds, imidazole compounds and imidazoline compounds. In addition, also usable are phenolic compounds, urea compounds, polysulfide compounds, etc.

Examples of the amine compounds include ethylenediamine, propylenediamine, diethylenetriamine, triethylenetetramine, and their amine adducts, metaphenylenediamine, diaminodiphenylmethane and diaminodiphenyl sulfone.

Examples of the acid anhydride compounds include phthalic anhydride, maleic anhydride, tetrahydrophthalic acid anhydride, hexahydrophthalic acid anhydride, methylnadic acid anhydride, pyromellitic acid anhydride, dodecenylsuccinic acid anhydride, dichlorosuccinic acid anhydride, benzophenonetetracarboxylic acid anhydride and chlorendic acid anhydride.

Examples of the amide compounds include dicyandiamide and polyamide.

Examples of the hydrazide compounds include adipic acid dihydrazide.

Examples of the imidazole compounds include methylimidazole, 2-ethyl-4-methylimidazole, ethylimidazole, isopropylimidazole, 2,4-dimethylimidazole, phenylimidazole, undecylimidazole, heptadecyl imidazole and 2-phenyl-4-methylimidazole,

Examples of the imidazolidine compounds include methylimidazoline, 2-ethyl-4-methylimidazoline, ethylimidazoline, isopropylimidazoline, 2,4-dimethylimidazoline, phenylimidazolzine, undecylimidazoline, heptadecylimidazoline and 2-phenyl-4-methylimidazoline.

These may be used either singly or as combined. Of those, preferred is dicyandiamide in consideration of the adhesiveness of the cured resin layer.

The blend ratio of the curing agent may depend on the equivalent ratio of the curing agent to be used to the epoxy resin (flexible epoxy resin and additional epoxy resin), and is, for example, from 0.5 to 50 parts by weight, preferably from 1 to 40 parts by weight based on 100 parts by weight of the total of the epoxy resin and the acrylonitrile-butadiene rubber.

According to the necessity, a curing accelerator may be incorporated in the resin composition along with the curing agent therein. Examples of the curing accelerator include imidazoles, ureas, tertiary amines, phosphorus compounds, quaternary ammonium salts and organic metal salts. These may be used either singly or as combined. The blend ratio of the curing accelerator may be, for example, from 0.1 to 10 parts by weight, preferably from 0.2 to 5 parts by weight based on 100 parts by weight of the total of the epoxy resin (flexible epoxy resin and additional epoxy resin) and the acrylonitrile-butadiene rubber.

In the invention, the foaming agent is preferably a thermally-degradable foaming agent that foams through thermal degradation, and Examples thereof include an inorganic foaming agent and an organic foaming agent.

Examples of the inorganic foaming agent include ammonium carbonate, ammonium hydrogencarbonate, sodium hydrogencarbonate, ammonium nitrite, sodium borohydride and azides.

Examples of the organic foaming agent include N-nitroso compounds (e.g., N,N'-dinitrosopentamethylenetetramine, N,N'-dimethyl-NN'-dinitrosoterephthalamide, etc.), azo compounds (e.g., azobisisobutyronitrile, azodicarboxylic acid amide, barium azodicarboxylate, etc.), alkane fluorides (e.g., trichloromonofluoromethane, dichloromonofluoromethane, etc.), hydrazine compounds (e.g., paratoluenesuifonyl hydrazide, diphenylsulfone-3,3'-disulfonylhydrazide, 4,4'-oxybis(benzenesulfonylhydrazide) (OBSH), allylbis(sulfonylhydrazide), etc.), semicarbazide compounds (e.g., p-toluylenesulfonylsemicarbazide), 4,4'-(benzenesulfonylsemicarbazide), etc.) and triazole compounds (e.g., 5-morpholyl-1,2,3,4-thiatriazole, etc.).

As the foaming agent, also usable are thermoexpanding fine particles of a thermoexpanding substance (e.g., isobutane, pentane, etc.) capsulated in microcapsules (e.g., microcapsules of thermoplastic resin of vinylidene chloride, acrylonitrile, acrylate, methacrylate or the like); and as such thermoexpanding fine particles, employable are commercial products such as Microsphere (trade name, by Matsumoto Yushi).

These may be used either singly or as combined. Of those, preferred is 44,'-oxybis(benzenesulfonylhydrazide) (OBSH) in consideration of the stable foamability of the composition not influenced by any external factor.

The blend ratio of the foaming agent may be from 0.1 to 30 parts by weight, preferably from 0.5 to 20 parts by weight based on 100 parts by weight of the total of the epoxy resin (flexible epoxy resin and additional epoxy resin) and the acrylonitrile-butadiene rubber.

According to the necessity, a foaming aid may be incorporated in the resin composition along with the foaming agent therein. Examples of the foaming aid include zinc stearate, urea compounds, salicylic acid compounds and benzoic acid compounds. These may be used either singly or as combined. The blend ratio of the foaming aid may be, for example, from 0.1 to 10 parts by weight, preferably from 0.2 to 5 parts by weight based on 100 parts by weight of the total of the epoxy resin (flexible epoxy resin and additional epoxy resin) and the acrylonitrile-butadiene rubber.

The resin composition used for the reinforcing material for outer panel of the invention preferably contains a filler in addition to the above-mentioned components. By incorporating the filler, the reinforcing material may exhibit an enhanced reinforcing effect.

Examples of the filler include calcium carbonate (e.g., heavy calcium carbonate, light calcium carbonate, Hakuenka, etc.), talc, mica, clay, mica powder, bentonite, silica, alumina, aluminum silicate, titanium oxide, carbon black, acetylene black, aluminum powder and glass balloons. These may be used either singly or as combined. The blend ratio of the filler may be, for example, from 10 to 500 parts by weight, preferably from 50 to 300 parts by weight based on 100 parts by weight of the total of the epoxy resin (flexible epoxy resin and additional epoxy resin) and the acrylonitrile-butadiene rubber.

According to the necessity, the resin composition used for the reinforcing material for outer panel of the invention may further contain known additives, for example, a tackifier (e.g., rosin resins, terpene resins, chromanindene resins, petroleum resins, etc.), a pigment (e.g., carbon black, etc.), a thixotropic agent (e.g., montmorillonite, etc.), a lubricant (e.g., stearic acid, etc.), a scorch inhibitor, a stabilizer, a plasticizer, an aging inhibitor, an antioxidant, a UV absorber, a colorant, an antifungal agent, a flame retardant and the like, in addition to the above-mentioned components.

The resin composition used for the reinforcing material for outer panel of the invention may be prepared by mixing the above-mentioned components in the blend ratio mentioned above; and not particularly limited, The components may be mixed and kneaded to obtain a kneaded mixture, using, for example, a mixing roll, a pressure kneader, an extruder or the like.

More specifically, for example, a flexible epoxy resin, an acrylonitrile-butadiene rubber, a filler and a low-polarity rubber are mixed and kneaded with a heated mixing roll, then cooled, and thereafter a curing agent, a curing accelerator and a foaming agent are added thereto, and further mixed and kneaded with a mixing roll to obtain a kneaded mixture.

Subsequently, although not particularly limited, the resin composition prepared as the kneaded mixture is rolled through calendering, extrusion or pressing under a temperature condition under which the foaming agent does not substantially degrade to thereby form a resin layer, and the resin layer is adhered and laminated to a reinforcing layer to produce a reinforcing material for outer panel.

The thickness of the rolled resin layer may be, for example, from 0.4 to 3 mm, preferably from 0.5 to 2.5 mm.

The reinforcing layer is to impart toughness to the foamed resin layer (hereinafter referred to a foam layer) and is sheet-like, and this is preferably formed of a light and thin film material capable of being closely integrated with the foam layer. As the material for the reinforcing layer, for example, glass cloth, resin-infiltrated glass cloth, synthetic resin nonwoven fabric, metal foil, carbon fiber, etc may be mentioned.

The glass cloth is a cloth formed of glass fibers, for which employable is known glass cloth. The resin-infiltrated glass cloth is prepared by impregnating synthetic resin such as a thermosetting resin or a thermoplastic resin into the above-mentioned glass cloth, for which employable is any known one. Examples of the thermosetting resin include epoxy resin, urethane resin, melamine resin, phenolic resin. Examples of the thermoplastic resin include vinyl acetate resin, ethylene-vinyl acetate copolymer (EVA), vinyl chloride resin, EVA-vinyl chloride resin copolymer. The above-mentioned thermosetting resin and the above-mentioned thermoplastic resin (e.g., melamine resin and vinyl acetate resin) may be mixed for use herein.

The metal foil may be any known metal foil such as aluminium foil, steel foil, etc.

Of those, preferred are glass cloth and resin-infiltrated glass cloth in consideration of the weight, the adhesiveness, the strength and the cost thereof.

The thickness of the reinforcing layer may be, for example, from 0.05 to 3 mm, preferably from 0.1 to 1.5 mm.

The total thickness of the resin layer and the reinforcing layer is from 0.4 to 5 mm, preferably from 0.6 to 3.5 mm.

According to the necessity, a separator (release paper, release film, etc.) may be adhered to the surface of the reinforcing layer of the obtained reinforcing material for outer panel.

In the thus-obtained reinforcing material for outer panel, the volume expansion ratio of the resin layer in foaming is preferably from 1.1 to 5.0 times, more preferably from 1.5 to 4.0 times. The density of the foamed body in the foam layer (weight (g) of the foamed body/volume (cm³) of the foamed body) may be, for example, from 0,2 to 1.0 g/cm³, preferably from 0.3 to 0.8 g/cm³.

The adhesive force of the reinforcing material for outer panel of the invention to the oiled face of a cold-rolled steel plate at 23°C is preferably 0.5 N/25 mm or more, more preferably from 1.0 to 10 N/25 mm. When the adhesive force is less than 0.5 N/25 mm, then the material may readily peel off from steel sheet.

Thus obtained reinforcing material for outer panel of the invention may be used, for example, for reinforcing the outer panel of various industrial machinery by adhering it to the outer panel and foaming and curing it thereon.

More specifically, the reinforcing material for outer panel of the invention includes a reinforcing layer 1 laminated to a resin layer 2, in which the surface of the resin layer 2 is optionally covered with a separator 3, as shown in Fig. 1(a); and in use thereof, the separator 3 is peeled away from the surface of the resin layer 2, and the surface of the resin layer 2 is adhered to an outer panel 4, as shown in Fig. 1(b); and thereafter this is heated at a predetermined temperature (for example, 160°C to 210°C) thereby foaming and curing to form a foam layer 5, as shown in Fig. 1(c).

The reinforcing material for outer panel of the invention is favorably used for reinforcing the outer panel of a car body that is required to have a reduced weight; and in such a case, the reinforcing material is, for example, first adhered to the outer panel of a car body in its assembly process, and then this is heated with the heat in electrodeposition coating, thereby foaming and curing to form a foam layer.

The reinforcing material for outer panel of the invention can prevent the strain that may occur in the design surface of vehicles.

Therefore, according to the reinforcing method for outer panel of the invention, an outer panel can be surely reinforced with inhibiting the strain to occur in the design surface of vehicles without changing the shape of the reinforcing material.

### Examples

The invention is described in more detail with reference to the following Examples and Comparative Examples, by which, however, the invention should not be limited at all.

### Examples and Comparative Examples

Constitutive components were mixed in the blend ratio shown in Table 1 and Table 2, and the resulting mixture was kneaded with a mixing roll to prepare a kneaded resin composition mixture. Incidentally, in the tables, the unit of the amount of the respective component is "parts by weight".

The components were mixed and kneaded as follows: First, epoxy resin, acrylonitrile-butadiene rubber, filler, low-polarity rubber, and tackifier were mixed and kneaded with a mixing roll heated at 120°C, then the resulting mixture was cooled to 50 to 80°C, and epoxy curing agent, epoxy curing accelerator, vulcanizing agent, vulcanization accelerator and foaming agent were added thereto, and further mixed and kneaded with a mixing roll to prepare a resin composition.

Next, the resin composition was rolled with a pressing machine to form a resin layer having a thickness of 0.6 mm. Afterwards, the resin layer was adhered to a resin-impregnated glass cloth with a thickness of 0.2 mm serving as a reinforcing layer, and a release sheet was adhered to the other surface of the resin layer opposite to the surface thereof to which the reinforcing layer had been adhered, thereby producing a reinforcing material for outer panel.

### Evaluation

Thus obtained, the reinforcing materials of Examples and Comparative Examples were evaluated in point of the reinforcing property, the adhesiveness to oiled face and the strain amount thereof, in the manner mentioned below, The results are shown in Table 1 and Table 2.

### 1) Reinforcing Property:

The release sheet was peeled away from the reinforcing material of Examples and Comparative Examples, and the reinforcing material was adhered to the entire surface of a cold-rolled steel plate having a size of 25 mm width × 150 mm length × 0.8 mm thickness (SPCC-SD) (manufactured by Nippon Test Panel) in an atmosphere at 20°C, and heated at 180°C for 20 minutes, whereby the resin layer was foamed and cured to produce a test piece, respectively. The expansion ratio (volume expansion ratio) of each resin layer of the reinforcing material is shown in Table 1. The expansion ratio is calculated by dividing the sample thickness after foaming and curing by the sample thickness before foaming and curing.

Next, each test piece was supported at a span of 100 mm with the steel plate thereof kept facing up; and at the center in the lengthwise direction thereof, a test bar was let down from the above in the vertical direction at a compression speed of 1 mm/min. After the bar reached the steel plate, the bending strength (N) thereof with 1 mm displacement and 2 mm displacement of the form layer was measured as the reinforcing property of the reinforcing material.

### 2) Adhesive force to Oiled Face:

A cold-rolled steel plate (SPCC-SD) (by Nippon Test Panel) was prepared for each reinforcing material, and a rust-preventive agent (Idemitsu Kosan's Daphne Oil Z-5) was applied onto the surface thereof, and this was stood vertical overnight at 20°C.

Next, each reinforcing material of Examples and Comparative Examples was cut into pieces having a width of 25 mm, its release sheet was peeled off. The piece was adhered under pressure with a 2-kg roller to the rust-preventive agent-coated surface of the steel plate in an atmosphere at 23°C; and after 30 minutes, the adhesive force (N/25 mm) was measured in an atmosphere at 23°C according to a 90° peeling test (at a tensile rate of 300 mm/min). This indicates the adhesiveness to oiled face.

### 3) Strain Amount:

A piece of the reinforcing material 7 having a size of 50 mm width × 100 mm length was adhered to the center part of an A6061 aluminum panel 6 having a size of 200 mm width × 300 mm length × 1 mm thickness, at room temperature with a 2-kg roller as in Fig. 2(a); and the measurement sites of unevenness 8 provided on the surface of the aluminum panel (the back thereof to which the reinforcing material had been adhered under pressure) in a length of 180 mm and at a pitch of 1 mm in the lengthwise direction and in a width of 200 mm and at a pitch of 5 mm in the widthwise direction as in Fig. 2(b) were analyzed for the surface unevenness of the test piece, using a laser displacement gauge.

Next, kept stood vertical, the reinforcing material-adhered aluminum panel was heated in a heating and drying furnace at 180°C for 20 minutes, and foamed and cured. After thus foamed and cured, the reinforcing material-adhered aluminum panel was cooled to room temperature, and again the surface unevenness thereof was measured under the same condition as above. The measured value before foaming and curing was subtracted from the measured value after foaming and curing, and the maximum value was taken as the strain of the sample. The strain data are shown in Table 1 and Table 2. Before and after foaming and curing, the external appearance condition of the design surface was image-processed, and the results are shown in Fig. 3.

**Table 1**

| Composition | | Ex. 1 | Ex. 2 | Ex. 3 | Ex, 4 | Ex. 5 | Ex. 6 | Ex. 7 | Ex. 8 |
|---|---|---|---|---|---|---|---|---|---|
| Epoxy Resin | #828 | | | | 50 | | | | |
| | #872 | 100 | | | | 100 | 100 | 100 | |
| | YL 7515-500 | | | 100 | 50 | | | | 20 |
| | EP4000S | | 100 | | | | | | |
| | EXA4816 | | | | | | | | |
| | EPR1309 | | | | | | | | |
| | EPU-78-11 | | | | | | | | |
| Acrylonitrile-Butadiene Rubber | NBR | 30 | 30 | 30 | 30 | 30 | 30 | 30 | 20 |
| Filler | Talc | 100 | 100 | 100 | 100 | 100 | 100 | 100 | 100 |
| | Calcium Carbonate | 100 | 100 | 100 | 100 | 100 | 100 | 100 | 100 |
| | Carbon Black | 5 | 5 | 5 | 5 | 5 | 5 | 5 | 5 |
| Low-polarity rubber | Styrene-Butadiene Rubber | 50 | 50 | 50 | 50 | | | | 60 |
| | Natural Rubber | | | | | 50 | | | |
| | Butadiene Rubber | | | | | | 50 | | |
| | Polyisobutylene | | | | | | | 50 | |
| Tackifier | Petroleum Resin | 50 | 50 | 50 | 50 | 50 | 50 | 50 | 50 |
| Softening Agent | Naphthene Oil | | | | | | | | |
| Epoxy Curing Agent | Dicyandiamide | 5 | 5 | 5 | 5 | 5 | 5 | 5 | 5 |
| Epoxy Curing accelerator | Urea Compound (DCMU) | 5 | 5 | 5 | 5 | 5 | 5 | 5 | 5 |
| Vulcanizing Agent | Fine Powder Sulfur | 30 | 30 | 30 | 30 | 30 | 30 | | 30 |
| Vulcanization Aid | Zinc Oxide | 5 | 5 | 5 | 5 | 5 | 5 | 5 | 5 |
| | Thiazole Compound | 10 | 10 | 10 | 10 | 10 | 10 | | 10 |
| Foaming Agent | OBSH | 3 | 3 | 3 | 3 | 3 | 3 | 3 | 3 |

| Evaluation | | Ex. 1 | 2 | Ex. 3 | Ex. 4 | Ex. 5 | Ex. 6 | Ex. 7 | Ex. 8 |
|---|---|---|---|---|---|---|---|---|---|
| Reinforcing Property (N/25 mm) | 1 mm displacement strength | 27 | 45 | 28 | 29 | 40 | 22 | 22 | 28 |
| | 2mm displacement strength | 46 | 81 | 51 | 50 | 72 | 39 | 35 | 51 |
| Expansion Ratio | time | 2,7 | 2.8 | 2.3 | 2.4 | 3.6 | 2 | 1,9 | 2.3 |
| Adhesive force to Oiled Face (N/25 mm) | 23°C | 4.4 | 0.8 | 5 | 2.9 | 2 | 2.5 | 0.8 | 5 |
| Strain Amount (µm) | to A6061P, 1.0 mm | 77 | 163 | 85 | 37 | 53 | 71 | 82 | 149 |

**Table 2**

| Composition | | Ex. 9 | Ex. 10 | Ex. 11 | Ex. 12 | Comp. Ex. 1 | Comp. Ex. 2 | Comp. Ex. 3 |
|---|---|---|---|---|---|---|---|---|
| Epoxy Resin | #828 | | | | | 100 | | |
| | #872 | | | | 200 | | 100 | |
| | YL 7515-500 | | | | | | | |
| | EP4000S | | | | | | | |
| | EXA4816 | 100 | | | | | | |
| | EPR1309 | | 100 | | | | | |
| | EPU-78-11 | | | 100 | | | | |
| Acrylonitrile-Butadiene Rubber | NBR | 30 | 30 | 30 | 15 | 30 | | |
| Filler | Talc | 100 | 100 | 100 | | 100 | 150 | 65 |
| | Calcium Carbonate | 100 | 100 | 100 | | 100 | | 65 |
| | Carbon Black | 5 | 5 | 5 | | 5 | 5 | 5 |
| Low-polarity rubber | Styrene-Butadiene Rubber | 50 | 50 | 50 | 25 | 50 | | 130 |
| | Natural Rubber | | | | | | | |
| | Butadiene Rubber | | | | | | | |
| | Polyisobutylene | | | | | | | |
| Tackifier | Petroleum Resin | 50 | 50 | 50 | 50 | | | 85 |
| Softening Agent | Naphthene Oil | | | | | | | 30 |
| Epoxy Curing Agent | Dicyandiamide | 5 | 5 | 5 | 5 | 5 | 5 | |
| Epoxy Curing accelerator | Urea Compound (DCMU) | 5 | 5 | 5 | 5 | 5 | 5 | |
| Vulcanizing Agent | Fine Powder Sulfur | 30 | 30 | 30 | 30 | 30 | | 30 |
| Vulcanization Aid | Zinc Oxide | 5 | 5 | 5 | 5 | 5 | | 5 |
| | Thiazole Compound | 10 | 10 | 10 | 10 | 10 | | 10 |
| Foaming Agent | OBSH | 3 | 3 | 3 | 3 | 3 | 3 | 3 |

| Evaluation | | Ex. 9 | Ex. 10 | Ex. 11 | Ex. 12 | Comp. Ex. 1 | Comp. Ex. 2 | Comp. Ex. 3 |
|---|---|---|---|---|---|---|---|---|
| Reinforcing Property (N/25 mm) | 1 mm displacement strength | 25 | 25 | 29 | 26 | 23 | 32 | 12 |
| | 2 mm displacement strength | 46 | 43 | 49 | 48 | 46 | 66 | 21 |
| Expansion Ratio | time | 2.4 | 2.8 | 3.2 | 2,4 | 2.3 | 2.8 | 2.2 |
| Adhesive force to Oiled Face (N/25 mm) | 23°C | 1.6 | 2.8 | 2.1 | 0.8 | 2.9 | 0.4 | 3.8 |
| Strain Amount (µm) | to A6061P, 1.0 mm | 164 | 133 | 133 | 102 | 244 | 292 | 32 |

Abbreviations in the tables are mentioned below.
#828: Biphenol A-type epoxy resin, trade name "Epikote #828", epoxy equivalent 180 g/eq, manufactured by Japan Epoxy Resin.
#872: Dimer acid-modified epoxy resin (flexible epoxy resin), trade name "Epikote #872", epoxy equivalent 600 to 700 g/eq, manufactured by Japan Epoxy Resin.
YL7515-500: Polyol-modified epoxy resin, epoxy equivalent 487 g/eq, manufactured by Japan Epoxy Resin.
EP4000S: Diglycidyl ether of bisphenol A propylene oxide adduct (polyol-modified epoxy resin), trade name "Adeka Resin EP-4000S", epoxy equivalent 320 g/eq, manufactured by ADEKA.
EXA4816: Aliphatic-modified epoxy resin, trade name "EPICLON EXA-4816", epoxy equivalent 403 g/eq, by DIC.
EPR1309; NBR-modified epoxy resin, trade name "Adeka Resin EPR1309", epoxy equivalent 300 g/eq, manufactured by ADEKA.
EPU-78-11: Urethane-modified epoxy resin, trade name "Adeka Resin EPU-78-11", epoxy equivalent 220 g/eq, manufactured by ADEKA.
Acrylonitrile-Butadiene Rubber: Trade name "NBR1042", acrylonitrile content 33.5 %, Mooney viscosity 77.5, manufactured by Nippon Zeon.
Carbon Black: Insulating carbon black, trade name "Asahi #50", manufactured by Asahi Carbon.
Styrene-Butadiene Rubber: Trade name "Toughden 2003", styrene content 25 %, Mooney viscosity 35 (ML₁₊₄, at 100°C), manufactured by Asahi Kasei.
Natural Rubber: Trade name "SVR-L", manufactured by DAU TIENG RUBBER CORPORATION.
Butadiene Rubber: Trade name "BR01", Mooney viscosity 45, manufactured by JSR.
Polyisobutylene: Trade name "Bistanex MML80", viscosity-average molecular weight 0.9 × 10⁶, manufactured by Tonex.
Petroleum Resin: Trade name "Escorez 1202", manufactured by Tonex.
Naphthene Oil; "NS-100" manufactured by Idemitsu Kosan.
Urea Compound (DCMU): 3-(3,4-Dichlorophenyl)-1,1-dimethylurea, manufactured by Hodogaya Chemical.
Thiazole Compound: 2-Mereaptobenzothiazole, trade name "Nocceler M", manufactured by Ohuchi Shinko Chemical.
OBSH: 4,4'-Oxybis(benzenesuflonylhydrazide), trade name (Neocellborn® N#1000S", manufactured by Eiwa Chemical.

In Fig. 3, "face condition" includes 3D-image-processed data of the unevenness condition of the design surface of the tested aluminum panel, in which the coloration indicates convex deformation; and "A-A' cross-section change" indicates the unevenness change in the specific cross section shown in the drawing. As known from these results, in Comparative Example 1, the design surface was greatly strained and deformed after foaming and curing, as compared with that before foaming and curing. On the other hand, in Example 1, little strain occurred, therefore bringing about no problem in practical use.

According to the reinforcing material for outer panel and the method for reinforcing an outer panel of the invention, the strain in the design surface of vehicles can be prevented to occur without changing the shape and the like of the reinforcing material and the design surface of vehicles can be reinforced.

## Claims

1. A reinforcing material for an outer panel, comprising a resin layer (2) and a reinforcing layer (1) laminated on the resin layer (2),
wherein the reinforcing material has: a 1 mm displacement strength of 20 N or more when adhered to an entire surface of a cold-rolled steel plate having a size of 25 mm width x 150 mm length x 0.8 mm thickness and then heated at 180°C for 20 minutes; and a strain amount of 170 µm or less when adhered to a center part of an aluminum panel having a size of 200 mm width x 300 mm length x 1 mm thickness, in the form of a rectangular having a size of 50 mm width x 100 mm length, and then heated at 180°C for 20 minutes,
wherein the resin layer (2) comprises a resin composition which contains: a rubber component containing at least a low-polarity rubber and an acrylonitrile-butadiene rubber; a flexible epoxy resin; a curing agent; and a foaming agent,
wherein the total thickness of the resin layer (2) and the reinforcing layer (1) is 0.4 to 5 mm,
wherein the low-polarity rubber is selected from the group consisting of a styrene-butadiene rubber, a polybutadiene rubber, a polyisoprene rubber, an isoprene-isobutylene rubber, a polyisobutylene rubber, a natural rubber, and a polybutene rubber, and
wherein the flexible epoxy resin is selected from the group consisting of an aliphatic-modified epoxy resin, a butadiene-based epoxy resin, an ε-capro|aotone-modified epoxy resin, a thiol-based epoxy resin, a rubber-modified epoxy resin, a dimer acid-modified epoxy resin, an urethane-modified epoxy resin, a polyol-modified epoxy resin, and an amine-modified epoxy resin.

2. The reinforcing material for outer panel according to claim 1, wherein a ratio by weight of the rubber component to the flexible epoxy resin is 20/80 to 95/5.

3. The reinforcing material for outer panel according to claim 1 or 2, wherein the curing agent is a thermosetting curing agent.

4. The reinforcing material for outer panel according to any one of claims 1 to 3, wherein the foaming agent is a thermally-degradable foaming agent.

5. A method for reinforcing an outer panel, said method comprising a step of adhering the reinforcing material according to any one of claims 1 to 4 to an outer panel, followed by foaming and curing.

## Patentansprüche

1. Verstärkungsmaterial für ein Außenpaneel, umfassend eine Harzschicht (2) und eine Verstärkungsschicht (1), die auf die Harzschicht (2) laminiert ist,
wobei das Verstärkungsmaterial aufweist: eine 1 mm-Verschiebungsfestigkeit von 20 N oder mehr, wenn es an einer gesamten Oberfläche einer kaltgewalzten Stahlplatte mit einer Größe von 25 mm Breite x 150 mm Länge x 0,8 mm Dicke anhaftet und anschließend 20 Minuten auf 180 °C erwärmt wird; und einen Dehnungsbetrag von 170 µm oder weniger, wenn es an einem Mittelteil eines Aluminiumpaneels mit einer Größe von 200 mm Breite x 300 mm Länge x 1 mm Dicke in Form eines Rechtecks mit einer Größe von 50 mm Breite x 100 mm Länge anhaftet und anschließend 20 Minuten auf 180 °C erwärmt wird,
wobei die Harzschicht (2) eine Harzzusammensetzung umfasst, welche enthält: eine Kautschukkomponente, die wenigstens einen Kautschuk mit niedriger Polarität und einen Acrylnitril-Butadien-Kautschuk enthält; ein flexibles Epoxidharz; ein Härtungsmittel; und ein Treibmittel,
wobei die Gesamtdicke der Harzschicht (2) und der Verstärkungsschicht (1) 0,4 bis 5 mm beträgt,
wobei der Kautschuk mit niedriger Polarität ausgewählt ist aus der Gruppe bestehend aus einem Styrol-Butadien-Kautschuk, einem Polybutadienkautschuk, einem Polyisoprenkautschuk, einem Isopren-Isobutylen-Kautschuk, einem Polyisobutylenkautschuk, einem Naturkautschuk und einem Polybutenkautschuk, und
wobei das flexible Epoxidharz ausgewählt ist aus der Gruppe bestehend aus einem mit einer aliphatischen Verbindung modifizierten Epoxidharz, einem Epoxidharz auf Butadienbasis, einem ε-Caprolacton-modifizierten Epoxidharz, einem Epoxidharz auf Thiolbasis, einem Kautschuk-modifizierten Epoxidharz, einem Dimersäure-modifizierten Epoxidharz, einem Urethan-modifizierten Epoxidharz, einem Polyol-modifizierten Epoxidharz und einem Amin-modifizierten Epoxidharz.

2. Verstärkungsmaterial für ein Außenpaneel gemäß Anspruch 1, wobei ein Gewichtsverhältnis der Kautschukkomponente zu dem flexiblen Epoxidharz 20/80 bis 95/5 beträgt.

3. Verstärkungsmaterial für ein Außenpaneel gemäß Anspruch 1 oder 2, wobei das Härtungsmittel ein wärmehärtendes Härtungsmittel ist.

4. Verstärkungsmaterial für ein Außenpaneel gemäß einem der Ansprüche 1 bis 3, wobei das Treibmittel ein thermisch abbaubares Treibmittel ist.

5. Verfahren zum Verstärken eines Außenpaneels, wobei das Verfahren einen Schritt des Anhaftens des Verstärkungsmaterials gemäß einem der Ansprüche 1 bis 4 an ein Außenpaneel, gefolgt von einem Verschäumen und Härten umfasst.

## Revendications

1. Matériau de renforcement pour panneau externe, comprenant une couche de résine (2) et une couche de renforcement (1) stratifiée sur la couche de résine (2),
lequel matériau de renforcement a : une résistance au déplacement de 1 mm de 20 N ou plus lorsqu'il est collé à une surface entière d'une plaque d'acier laminée à froid ayant une dimension de 25 mm de large x 150 mm de long x 0,8 mm d'épaisseur puis chauffé à 180 °C pendant 20 minutes ; et une quantité de contrainte de 170 µm ou moins lorsqu'il est collé à une partie centrale d'un panneau d'aluminium ayant une dimension de 200 mm de large x 300 mm de long x 1 mm d'épaisseur, sous la forme d'un rectangle ayant une dimension de 50 mm de large x 100 mm de long, puis chauffé à 180 °C pendant 20 minutes,
dans lequel la couche de résine (2) comprend une composition de résine qui contient : un constituant de caoutchouc contenant au moins un caoutchouc de faible polarité et un caoutchouc acrylonitrile-butadiène ; une résine époxy flexible ; un agent de durcissement ; et un agent moussant,
dans lequel l'épaisseur totale de la couche de résine (2) et de la couche de renforcement (1) est de 0,4 à 5 mm,
dans lequel le caoutchouc de faible polarité est choisi dans le groupe constitué par un caoutchouc styrène-butadiène, un caoutchouc polybutadiène, un caoutchouc polyisoprène, un caoutchouc isoprène-isobutylène, un caoutchouc polyisobutylène, un caoutchouc naturel, et un caoutchouc polybutène, et
dans lequel la résine époxy flexible est choisie dans le groupe constitué par une résine époxy modifiée par un aliphatique, une résine époxy à base de butadiène, une résine époxy modifiée par l'ε-caprolactone, une résine époxy à base de thiol, une résine époxy modifiée par un caoutchouc, une résine époxy modifiée par un acide dimère, une résine époxy modifiée par uréthane, une résine époxy modifiée par polyol, et une résine époxy modifiée par une amine.

2. Matériau de renforcement pour panneau externe selon la revendication 1, dans lequel un rapport en poids du constituant caoutchouc à la résine époxy flexible est de 20/80 à 95/5.

3. Matériau de renforcement pour panneau externe selon la revendication 1 ou 2, dans lequel l'agent de durcissement est un agent de durcissement thermodurcissable.

4. Matériau de renforcement pour panneau externe selon l'une quelconque des revendications 1 à 3, dans lequel l'agent moussant est un agent moussant dégradable thermiquement.

5. Procédé pour renforcer un panneau externe, ledit procédé comprenant une étape consistant à coller le matériau de renforcement selon l'une quelconque des revendications 1 à 4 sur un panneau externe, suivie par un moussage et un durcissement.
